# EUROPEAN PATENT SPECIFICATION

(11) **EP 1 993 233 B1**
(45) Date of publication and mention of the grant of the patent: **01.07.2009**
(21) Application number: 07290618.3
(22) Date of filing: 15.05.2007
(51) Int. Cl.: H04L 12/26, H04L 12/24

(54) **Method of evaluating a transmission quality by injecting meta-information**
Verfahren zur Bewertung einer Übertragungsqualität durch Hinzufügung von Metainformationen
Procédé d'évaluation d'une qualité de transmission en injectant une information méta

(43) Date of publication of application: 19.11.2008
(73) Proprietor: Alcatel Lucent, 75008 Paris (FR)
(72) Inventor: Hocke, Ralf, 91056 Erlangen (DE); Wenzel, Georg, 90427 Nürnberg (DE); Stoll, Dieter, 91056 Erlangen (DE)
(74) Representative: Schmidt, Werner Karl

(56) References cited:
- SHAHBAZIAN J ET AL: "SNMP counter for distributed monitoring of MPEG video quality" ELECTRONICS LETTERS, IEE STEVENAGE, GB, vol. 39, no. 1, 9 January 2003 (2003-01-09), pages 166-168, XP006019493 ISSN: 0013-5194
- SHAHBAZIAN JOHN; CHRISTENSEN KENNETH J: "TSGen: A tool for modeling of frame loss in streaming video" INTERNATIONAL JOURNAL OF NETWORK MANAGEMENT, [Online] vol. 14, no. 5, 9 July 2004 (2004-07-09), pages 315-327, XP002447358 INT J NETWORK MGMT 2004 ISSN: 1055-7148 Retrieved from the Internet: URL:http://portal.acm.org/ft_gateway.cfm?i d=1024515&type=pdf&coll=GUIDE&dl=GUIDE&CFI D=32301573&CFTOKEN=40611433> [retrieved on 2007-08-20]
- CLARK TELCHEMY INCORPORATED A PENDLETON NORTEL A: "RTCP XR - IP Video Metrics Report Blocks 00.txt" IETF STANDARD-WORKING-DRAFT, INTERNET ENGINEERING TASK FORCE, IETF, CH, vol. avt, December 2006 (2006-12), XP015047705 ISSN: 0000-0004
- "Speech Processing, Transmission and Quality Aspects (STQ)" ETSI STANDARDS, EUROPEAN TELECOMMUNICATIONS STANDARDS INSTITUTE, SOPHIA-ANTIPO, FR, vol. STQ-MOBILE, no. V111, August 2005 (2005-08), XP014031771 ISSN: 0000-0001

## Description

The present invention relates to a method of evaluating a transmission quality of an audio and/or video data stream transmitted as a data packet stream through a packet-based network, and a source node and a monitoring node to execute said method.

Transport of TV signals over IP, known as IPTV, is a new emerging service for network/service providers (TV = Television; IP = Internet Protocol; IPTV = Internet Protocol Television). The approach consists of transforming the audio/video stream (pictures, speech, etc.) into a sequence of packets, which are then transported over a packet network infrastructure, in contrast to currently used techniques of TV broadcast over radio waves (satellite or terrestrial). These video streams are a composition of different sub-streams (audio, video, etc.) which may differ in significance. These sub-streams are transported over a shared IP network, where parts of the sub-streams might be dropped or lost, respectively, due to congestion. Consequently, when packets are dropped/lost inside the IP distribution network, not the complete TV stream of pictures, speech and additional information (e.g. TV program information) arrives at a consumer.

For the experienced service quality, i.e., the IPTV quality as experienced by the consumer, the details of how packets are dropped in a congestion situation are very important. For example, MPEG-2 video streams contain different types of frames, e.g., so called I-frames which consist of self-contained picture information and so-called P-Frames and B-frames which consist of delta-information with respect to I-frames and/or P-Frames (MPEG = Moving Picture Experts Group; I = intra coded; P = predictive; B = bi-directional). For transport over an IP network, these frames are typically fragmented into packets, so that the information from multiple consecutive packets must be recombined in order to reconstruct the entire frame.

It is possible to use GOP (= Group of Pictures) sequences with approximately two I-Frames, six P-Frames and sixteen B-frames per second. A missing portion of an I-Frame, due to single or multiple packet loss, will influence the decoding of subsequent pictures, since the B-frames referring to the I-frame will miss the reference information which was in the dropped packets (similar for the P-Frames). On the other hand, missing a portion of a B-Frame will not influence the decoding of adjacent pictures. Therefore losing packets which contain portions of an I-Frame (or P-Frame) has a larger impact to the overall service than missing packets which contain portions of a B-Frame. If a part of the information of an I-Frame or even the complete one is lost, this will influence all subsequent pictures until the transmission of the next I-Frame. The resulting video deterioration from a lost I-Frame, e.g., will be observed approximately over half a second and for a lost B-Frame only for 40 ms (for a P-Frame anything in between). For a given quality of experience (= QoE) perceived by the end user it is therefore important which sub-stream was corrupted to what amount. Without the claim to be exhaustive the different sub-streams might be identified by the different frame types (I-Frame, P-Frame, B-Frame, Sl-Slice, SP-Slice, Sprites, ...), scalability layers, audio, control, etc. (SI = Switching I, SP = Switching P).

For a service/network provider, it is important to know what the actual QoE of his clients is and what his contribution is to a degraded QoE. As long as all packets are delivered, there is no impact on QoE unless packet delay and jitter degrade the video service. To monitor the packet loss rate, the OAM functionality of today's packet networks is used, which relies on Ethernet and MPLS counters or the sequence number of the RTP protocol which is used for transporting video IP packets (OAM = Operation Administration and Maintenance; MPLS = Multi-Protocol Label Switching; RTP = Real-Time Transport Protocol). This kind of monitoring of the packet loss rate is known today and is used as a rough indicator for service quality at different places in the network.

However, a given IPTV RTP stream typically consists of different sub-streams with different significance regarding the experienced service quality. Therefore monitoring of the packet loss rate by evaluating the RTP sequence number is not a useful measure for the QoE experienced by the customer. This number is not aware of the service importance of a lost packet, since it has no knowledge whether the packet contains, e.g., I-frame, B-frame or other information. If packets are lost, a single, integral number does not say anything about the real service impact.

OAM counters and probes on the other hand are even less specific to video streams and are only suited for general supervision of network connectivity and potential bottlenecks on time scales much larger than seconds.

Summarising the aforementioned facts, it becomes clear that neither using the RTP sequence numbers nor using the network layer OAM frames is suited to address the specific needs of media streaming such as IPTV. The measure to just counting missed frames is not a gauge for the user's experienced quality of the audio/video stream and useless as an appropriate quality measure.

The only option to evaluate the quality of the audio/video stream is to decode the audio/video stream, which requires much more hardware support and which is therefore expensive. Furthermore it is not always possible to decode the audio/video within the service/network provider's field of responsibility, as the audio/video stream might be protected by DRM until the decoding is done in the client's equipment (DRM = Digital Rights Management).

As a consequence, the service/network provider can in practice neither detect mis-configurations in his network, nor can he distinguish between network-caused problems and customer-caused problems of degraded QoE.

Shahbazian, J.; Christensen, K.: "SNMP counter for distributed monitoring of MPEG video quality", Electronics Letters, IEE Stevenage, GB, Vol. 39, No. 1, 9th January 2003, pages 166-168, describes a method of counting and identifying MPEG frames in an IP packet stream for embodiment in an SNMP counter. The SNMP counter allows for distributed monitoring of the quality of streaming video. The SNMP counter is evaluated using software emulation and it is shown that user perceivable video anomalies can be measured.

Shahbazian John; Christensen, Kenneth J.: "TSGen: a tool for modeling of frame loss in streaming video", International Journal of Network Management, Vol. 14, No. 5, 9th July 2004, pages 315-327, describes a Time Series Generator (TSGen) to generate a time series that models video packet loss phenomena by capturing both the moment and auto-correlation signatures of frame loss in a video stream.

Clark, A; Pendleton, A.: "RTCP XR - IP Video Metrics Report Blocks", Internet Draft December 2006, Internet Engineering Task Force IETF, defines extensions to the RTCP XR extended report packet type blocks to support the monitoring of video overlap and the associated audio streams, if present, for IPTV and video conferencing endpoint reporting.

"Speech Processing, Transmission and Quality Aspects (STQ); Guidelines for the use of Video Quality Algorithms for Mobile Applications", ETSI TR 102 493 Version 1.1.1, August 2005 (2005-08), Technical Report, European Telecommunications Standards Institute ETSI, Sophia Antipolis, FR, gives guidelines for the use of video quality algorithms for the different services and scenarios applied in the mobile environment.

It is the object of the present invention to provide an improved evaluation of a transmission quality of an audio and/or video data stream.

The object of the present invention is achieved by a method of evaluating a transmission quality of an audio and/or video data stream transmitted as a data packet stream via a transmission path from a source node through a packet-based network to a destination node, the method comprising the steps of assigning, by the source node, meta-information related to the data packets to the data packets and injecting, by the source node, the data packets together with said assigned meta-information as the data packet stream into the transmission path whereby the meta-information is conveyed in a header of the data packets; and monitoring, at a monitoring node located at the transmission path, the meta-information of data packets passing the monitoring node on said transmission path, whereby the method further comprises the steps of inserting, by the source node, statistical reference information associated with the transmitted data packets into the data packet stream at specific time-steps whereby specific packets carry the statistical reference information; receiving, at said monitoring node, the statistical reference information associated with the transmitted data packets; and providing, based on the monitored meta-information and the received statistical reference information, a measure of the transmission quality. The object of the present invention is further achieved by a source node for evaluating a transmission quality of an audio and/or video data stream transmitted as a data packet stream via a transmission path from the source node through a packet-based network to a destination node, the source node comprising a control unit adapted to assign meta-information related to the data packets to the data packets and inject the data packets together with said assigned meta-information as the data packet stream into the transmission path whereby the meta-information is conveyed in a header of the data packets, whereby the control unit is further adapted to insert statistical reference information associated with the transmitted data packets into the data packet stream at specific time-steps whereby specific packets carry the statistical reference information. Moreover, the object of the present invention is achieved by a monitoring node for evaluating a transmission quality of an audio and/or video data stream, whereby the monitoring node is located at a transmission path of the audio and/or video data stream transmitted as a data packet stream from a source node through a packet-based network to a destination node, the monitoring node comprising a control unit adapted to monitor meta-information related to data packets passing the monitoring node on said transmission path, the meta-information assigned to the data packets by the source node and injected together with the data packets as the data packet stream into the transmission path, and the meta-information conveyed in a header of the data packets, whereby the control unit is further adapted to receive statistical reference information associated with the transmitted data packets and inserted by the source node into the data packet stream at specific time-steps, said statistical reference information carried by specific packets, and provide, based on the monitored meta-information and the received statistical reference information, a measure of the transmission quality.

The invention enables a non-intrusive monitoring of application level quality statistics in the transport network.

The proposed invention enables to measure the user-experienced quality of service, the so-called quality of experience (=QoE), of a packetised audio/video stream without the need to decode the audio/video stream. This reduces the processing effort.

A service/network provider is interested in distinguishing the quality of IPTV streams or videoconference streams handed over to the customer's equipment for two reasons. First, the provider wants to distinguish service degradation caused by the provider from those caused by the customer or the customer's equipment. Second, the provider wants to be able to manage his network so that QoE is high and thus he wants to spot systematic deterioration early in time. By means of the proposed invention, the service provider is able to determine what is the actual QoE of his clients and what is his contribution to a degraded QoE.

Counting given frame types and comparing these numbers to an expected number according to the present invention enables an easy measure of the service degradation in case packets are lost in a packet distribution network.

The functionality offered by the present invention is useful in residential gateways. It gives a network provider an easy possibility to measure the QoE provided to the user at the edge of his network without decoding the video itself. The transport of the video content through the customer owned private network - from the residential gateway to the Set Top box - will therefore be under the responsibility of the customer. For the network provider it removes therefore the liability for the customer owned network.

If the video service is transmitted through several networks of different network providers the situation is similar. The customer in this case is the subsequent network provider of a given video distribution chain. This invention allows video monitoring with reduced hardware requirements even for a large amount of video channels at the network edges.

For a network provider, the functionality of the present invention allows to monitor the quality of a video stream with simple measures during the propagation of the video stream through his own network. This can be used to detect and correct network dimensioning and provisioning issues - either triggered by the operator or executed automatically inside the network node, e.g. by reallocating additional bandwidth to queues which suffer too high packet loss.

Further advantages are achieved by the embodiments of the invention indicated by the dependent claims.

Preferably, the source node assigns to each data packet of the audio and/or video data stream meta-information related to the data packet. After assignment of meta-information associated with the data packet, the source node injects the data packet together with the meta-information assigned to the data packet into the transmission path. Therefore, the data packet stream represented by the injected audio/video data packets comprises audio/video content data packets, each with assigned meta-information.

Generally, said meta-information associated with the data packets transmitted through the network is data about these data packets. The meta-information does not comprise audio and/or video content data contained in the payload section of a data packet. For example, meta-information may be the information contained in a header of a data packet, or at least a part of this header information. Meta-information may be a time stamp, information about the length or volume of the payload section of a data packet, a sequence number assigned to the data packet, an indication of an audio and/or video entity the data packet is associated with, e.g., an indication of a video frame or layer the data packet belongs to or contributes to, or other parameters associated with the data packet.

According to a preferred embodiment of the invention, dedicated packets are designed wherein these dedicated packets are dedicated for the transport of the statistical reference information. The control unit of the source node controls that the statistical reference information is set into these dedicated packets, and that these dedicated packets are injected - in-band with the data packet stream of the audio/video packet data stream - into the data packet stream of the audio/video packet data stream.

According to another preferred embodiment of the invention, the control unit of the monitoring node monitors the data packets that pass the monitoring node. If a passing data packet is associated with the audio and/or video data stream, the control unit reads and stores the meta-information assigned to the passing data packet. On the basis of the meta-information acquired this way from two or more data packets, the control unit computes a statistics with regard to the meta-information. The statistics computed by the control unit is specific to the location of the monitoring node within the network, i.e., its position on the transmission path. Because of its local reference, the statistics are called local statistics.

It is possible that the control unit updates the local statistics every time it has read a new piece of meta-information from a passing data packet. However, it is also possible that the control unit continuously stores meta-information but updates the local statistics at a predefined event, e.g., at a pre-set time step or after the acquisition of meta-information from a predefined number of data packets.

It is possible that the begin and end of a time period during which the control unit has to collect information about data packets from the data stream is indicated by an indication data packet. For example, after receipt of an indication data packet indicating the beginning of a statistics time period, the control unit starts collecting meta-information of all passing data packets into a specific storage place. The control unit continues collecting meta-information until the monitoring node receives an indication data packet indicating the end of the statistics time period. Then, a statistical value related to this indicated time period is deduced from the meta-information gathered in the specific storage place during the time period. Possibly, an indication data packet indicating the end of the statistics time period may at the same time represent an indication data packet indicating the beginning of the following statistics time period, i.e., the statistics time period follow in succession one after another, without a break.

It is also possible that start and the end time stamps, respectively, of said statistics time period are explicitely indicated by means of time stamps. For example, the monitoring node receives two time stamps which give the exact time points of the beginning and the end of a statistics time period. Then, a statistical value related to this indicated time period is deduced from the meta-information gathered in a specific storage place during the time period specified by the beginning time stamp and the end time stamp. It is possible that these time stamps are transported by dedicated data packets. However, it is also possible that these time stamps are transported as meta-information assigned to data packets transporting audio/video content.
As aforementioned, the control unit of the monitoring node monitors the data packets that pass the monitoring node. If a passing data packet is associated with statistical reference information regarding the audio and/or video data stream, the control unit reads the statistical reference information and puts it into a memory. The control unit then compares the statistical reference information held in the memory and the established local statistics, i.e., the control unit applies an analysis to the statistical reference information and the local statistics.

According to another preferred embodiment of the invention, the control unit of the source node determines a type of a data packet before injecting it into the data packet stream. The type of the data packet may be specified, e.g., in the header of the data packet. The control unit assigns a significance class to the data packet, based on the determined type of the data packet. The control unit may look up the correlation between the type of a data packet and a significance class in a lookup table defined by a network provider or a service provider. The significance class specifies the importance a data packet associated with the audio and/or video data stream has for the user-perceived quality of the audio and/or video data stream. The control unit assigns said significance class as said meta-information to each data packet before injecting the data packet into the data packet stream.

In addition to the assignment of a significance class to each transmitted data packet, the control unit of the source node keeps an account of the number of data packets injected into the data packet stream per significance class. The control unit of the source node provides the accounted numbers of data packets per significance class as statistical reference information to the monitoring node. The control unit of the monitoring node reads this statistical reference information and puts it into a storage. In parallel, the control unit of the monitoring node counts the number of data packets passing the monitoring node per significance class and puts the counted numbers onto a storage.

Thus, the control unit of the monitoring node is enabled to compare the number of data packets transmitted by the source node per significance class and the number of data packets passing the monitoring node per significance class. The control unit of the monitoring node calculates the difference of the two numbers per significance class. Since data packets will get lost on the transmission path through the transport network, the number of data packets transmitted by the source node per significance class will always be larger than or equal to the number of data packets passing the monitoring node per significance class. The difference of the two numbers per significance class gives the number of data packets lost per significance class. Depending on the number of data packets lost per significance class, a transmission quality of the audio and/or video data stream is evaluated.

In a preferred embodiment, the evaluation of the transmission quality of the audio and/or video data stream is conducted with a reference to time. The control unit of the source node indicates the number of data packets transmitted during a predefined time segment as statistical reference information. Preferably, packet counters are used to indicate this number. The control unit of the source node inserts said statistical reference information into the data packet stream when the end of the predefined time segment is reached. Thus, the statistical reference information comprises the number of data packets transmitted during said predefined time segment.

In parallel, during said predefined time segment, the control unit of the monitoring node determined the number of data packets passing the monitoring node during the predefined time segment. When a data packet carrying the statistical reference information transmitted by the source node passes the monitoring node, the control unit of the monitoring node extracts the statistical reference information from the data packet stream and compares the received statistical reference information, specifying the number of data packets transmitted during the predefined time segment, with the number of data packets counted by the control unit of the monitoring node during the predefined time segment. Based on the comparison result, a transmission quality of the audio and/or video data stream characteristic for the predefined time segment is provided.

According to a preferred embodiment of the invention, the control unit of the monitoring node does not decode the video/audio content for evaluation of the transmission quality. Therefore, the processing effort conferred onto the monitoring node is reduced. Due to DRM-related encryption of the audio/video content, a decoding of the audio/video content at the monitoring node of a provider network might not be possible, anyway, since the network provider usually does not possess the decryption key. The monitoring node extracts and collects the meta-information from the data packet stream without any need for video decoding. Therefore, it is possible to estimate the QoE, e.g., by simply counting frames of different significance, without the necessity to decode the complete video/audio. The avoidance of a decoding process leads to the advantage that the evaluation of the transmission quality can also be done with encrypted data streams where the video/audio content has been encrypted. According to the invention, the evaluation of the transmission quality is possible without having the decryption key.

According to another preferred embodiment of the invention, the control unit of the source node inserts the meta-information associated with a transmitted data packet into an unencrypted signalling field of the data packet, particularly in a header of the data packet. Being unencrypted, the meta-information is easily accessible by the monitoring node and the evaluation of the transmission quality can be easily performed without time-consuming decryption. Relying on unencrypted meta-information avoids processing bottlenecks where, e.g., it might not be possible for a network provider to decrypt/decode the video, maybe one out of thousands encrypted streams. According to the invention, the evaluation of the transmission quality is possible without decryption or decoding.

Preferably, the meta-information might be removed from the data packets comprised in the data packet stream by the control unit of the monitoring node. As the meta-information is additionally assigned and appended to the data packets, the size of each data packet is increased, although this increase may be only slight. Therefore, the removal of the meta-information from the data packet stream decreases the amount of bandwidth required per time unit for the transmission of the audio and/or video data stream. This may be advantageous if the data packet stream must transit a sub-network with reduced bandwidth availability, e.g., a wireless transport network.

Preferably, the control unit is further adapted to report the measure of the transmission quality to the source node and/or to the destination node and/or to an operator of the network. In every scenario, a feedback signal informs the provider or some automatic system of a signal degradation, which allows a fast error handling and maybe fast error resilience measures.

These as well as further features and advantages of the invention will be better appreciated by reading the following detailed description of presently preferred exemplary embodiments taken in conjunction with the accompanying drawings of which:
- Fig. 1: is a schematic diagram of an IPTV transmission according to an embodiment of the invention.
- Fig. 2: is a schematic diagram of an IPTV transmission according to another embodiment of the invention.

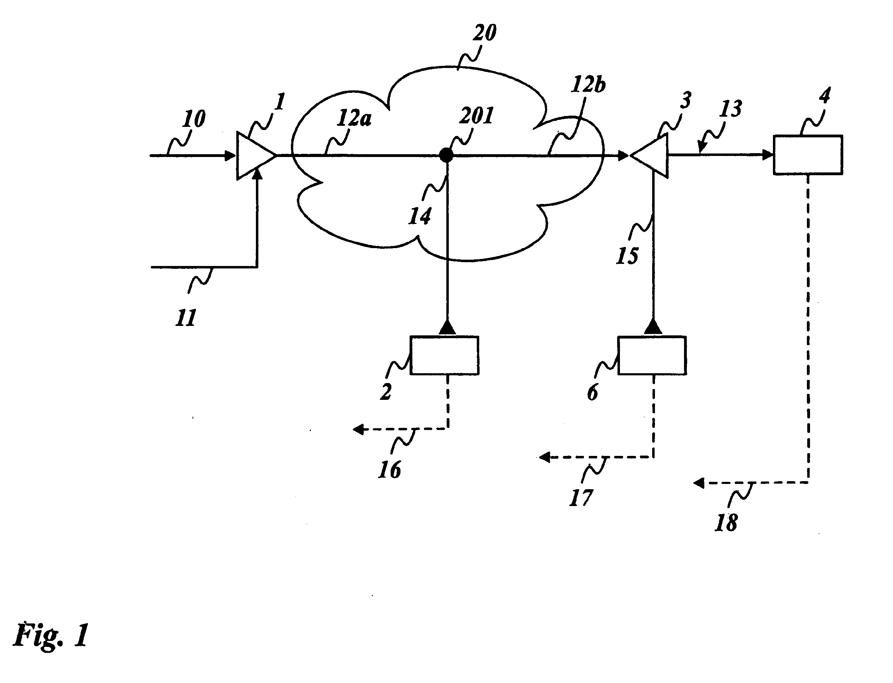

Fig. 1 shows a source node 1 inserting data packets associated with an IPTV data stream on a transmission path 12a, 12b through a packet-based transport network 20, a monitoring node 2 located at the transmission path 12a, 12b, and a destination node 3 receiving data packets associated with the IPTV data stream.

The source node 1 receives an analogue or digital video signal 10. If the video signal 10 is an analogue video signal, the source node 1 may apply to the video signal 10 an A/D conversion(A/D = Analogue/Digital). If the digital video signal 10 received by the source node 1 is a digital signal, the encoder may recode the digital video signal. Thus, IPTV packets carrying the content of the video signal 10 are created. The source node 1 comprises an encoder for encoding the data packets. The encoder knows which information (I-frame, P-frame, B-frame, base-layer, enhancement-layer, etc.) is encoded in a given data packet.

Video frames are encoded in packets which have a different significance. For example, according to the MPEG-2 standard, a typical GOP sequence is I-B-B-P-B-B-P-B-B-P-B-B-I. If a packet associated with an I-frame gets lost, all subsequent frames are influenced and degraded accordingly. If a packet associated with a B-frame gets lost, this only influences the respective B-frame. Thus the overall weight of an I-frame packet exceeds the weight of a B-frame packet. There are a lot of other elements, beside the mentioned I/P/B-frame information, which have a different significance for the overall QoE of the service. For example, a user might accept if the information of an enhancement layer is degraded as long as the base layer is not degraded.

It is now up to the encoder to signal this information to subsequent processing steps. After packaging of the video signal 10, the payload might be encrypted. If the encoder signals the meta-information (significance classes corresponding to I-frame, P-frame, B-frame, base-layer, enhancement-layer, etc.) to the encryption layer, the significance information is still available. It is neither necessary to encrypt this information, nor is it desired. Forwarding the meta-information unencrypted to the lower layers allows the use of this information also for lower layers.

For example, the video data packets are prepared for transport via RTP, i.e., the data packets get an RTP header. Correspondingly, the meta-information is conveyed in the header of the RTP packet. The encoded data packets are then injected by the source node 1 onto the transmission path 12a, 12b through the packet-based transport network 20.

Additionally, the RTP layer does statistics on the transmitted data packets per meta-information (significance class) and adds this information via additional RTP statistic packets periodically in-band to the video packet stream.

These additional RTP statistic packets could be specially defined LM-OAM packets added on a regular basis (e.g. every 10 milliseconds) to the video packet stream (LM = Loss Measurement). These LM-OAM packets contain sub-stream meta-information suitable for quality assessment without full video decoding.

For example, sub-stream specific packet counters are used as meta-information. During the video-encoding and video packetisation, counters are used to count the amount of packets of dedicated parts of the video stream (e.g. I-frame packets, P-frame packets, B-frame packets, audio frame packets, control frame packets, enhancement layer packets, etc.). These individual counters are aggregated into the LM-OAM packets together with OAM packet specific attributes such as a specific OAM packet identifier, sequence numbers, frequency information at the generating side, etc. These LM-OAM packets 11 are inserted into the video stream in-band.

The meta-information may relate to a pre-defined time period, e.g., to a time period of 0,5 - 10 s. The statistical reference information inserted into one of the LM-OAM packets 11 may comprise, for example, the following data: time stamp 12543, 12 I-frame packets, 50 P-frame packets, 200 B-frame packets. These data specify how many data packets per significance class have been transmitted by the source node during a time period that begins at the beginning time stamp 12543. The end time of the time period that begins at the beginning time stamp 12543 may be known to all network nodes by means of a predefined convention with reference to stream-specific time steps. For example, a time period may be defined to last generally 1 second and be identified by the number of the beginning time stamp assigned to that time period. Each audio/video data packet stream may possess its own stream-specific system clock.

The OAM packets can then be specifically monitored inside the distribution network. This way it is possible, to detect OAM message loss itself, and to detect packet loss of a specific kind, if the OAM frame provided counter values are compared to the values of packet counters for actually received packets of a specific sub-stream.

The monitoring node 2 monitors, through a monitoring line 14, the data streams passing the point 201 on the transmission path 12a, 12b. The monitoring node 2 has counted during the time period 12543 the following numbers of data packets associated with the IPTV packet stream: 10 data packets associated with I-frames, 42 data packets associated with P-frames, and 173 data packets associated with B-frames. When the monitoring node 2 receives the LM-OAM packet associated with the time period 12543, the monitoring node 2 is able to do a comparison between the statistical reference information contained within the LM-OAM packet of time period 12543 and the data packets per significance class counted by itself.

From this comparison, the monitoring node 2 deducts the comparison result that 2 data packets associated with I-frames, 8 data packets associated with P-frames, and 27 data packets associated with B-frames have been lost on the section 12a of the transmission path 12a, 12b. The aforementioned numbers of data packets per significance class counted by the monitoring node 2 at the point 201 thus represent a local statistics, i.e., local with reference to the transmission path section 12a between the source node 1 and the point 201 on the transmission path 12a, 12b.

The result of the analysis is collected and reported back as a feedback message 16 to an operator of the network 20. This report can be made using the respective means of the network equipment hosting the monitoring function 2, e.g. SNMP traps, TL1 notifications, etc. (SNMP = Simple Network Management Protocol; TL1 = Transaction Language 1).

It is possible that the evaluation of the transmission quality of the IPTV data stream on the basis of the determined data packet loss per significance class is already done at the monitoring node 2. This means that the monitoring node 2 allocates a value from a transmission quality scale (e.g., unacceptable, low, medium, high, excellent) to the IPTV data stream, based on the amount of lost data packets. This allocation may be based on a predefined lookup table, provided, e.g., by a network provider. It is also possible that the monitoring node 2 simply reports back the amount of lost data packets per significance class to another entity and that the further processing of the loss data and the subsequent evaluation of the transmission quality of the IPTV data stream is done at this entity where the monitoring node 2 was reporting to, e.g., at a provider's unit, at the source node 2, or at the destination node 3.

An evaluation of the transmission quality of the IPTV data stream may also be conducted by another monitoring node 6 with reference to the destination node 3. The monitoring node 6 monitors, through a monitoring line 15, the data streams passing the destination node 3 at the end of the transmission path 12a, 12b. The monitoring node 6, just like the aforementioned intermediate monitoring node 2, counts the amount of data packets per significance class passing during a specific time period 12543 and compares the amount with a statistical reference information specifying the amount of data packets per significance class transmitted by the source node.

From this comparison, the monitoring node 6 deducts a comparison result, e.g., that 3 data packets associated with I-frames, 10 data packets associated with P-frames, and 40 data packets associated with B-frames have been lost on the total transmission path 12a, 12b. This represent again a local statistics, i.e., local with reference to the transmission path sections 12a and 12b between the source node 1 and the destination node 3.

The result of the analysis is collected and reported back as a feedback message 17 to an operator of the network 20. The operator, when comparing the report received from the monitoring node 2 and the report received from the monitoring node 6, may conclude the results listed in the following Table 1:

**Table 1**

| Packet loss | Section 12a | Section 12b | Total |
|---|---|---|---|
| I-frame | 2 | 1 | 3 |
| P-frame | 8 | 2 | 10 |
| B-frame | 27 | 13 | 40 |

Table 1 shows that the packet loss is higher in the section 12a of the transmission path 12a, 12b than in the section 12b. Thus, the transmission quality in the virtual sub-network represented by the section 12a is lower than in the virtual sub-network represented by the section 12b. For the operator, this may be a starting point to analyse and compare the transmission conditions and parameters within the two virtual sub-networks 12a and 12b.

At the destination node, the IPTV data packets are decoded and a video signal 13 is prepared which is suited as input signal of a receiver 4, e.g., a TV set. Additionally, also a user watching the video signal on the receiver 4 may provide a (really user-specific) feedback message 18 to the operator of the network 20, serving as a valuable gauge with respect to the feedback signals 16 and 17 from the monitoring nodes 2 and 6.

Each of the monitoring nodes 2 and 6, and the source node 1 is composed of one or several interlinked computers, i.e., a hardware platform, a software platform basing on the hardware platform and several application programs executed by the system platform formed by the software and hardware platform. The functionalities of the nodes 1, 2, and 6 are provided by the execution of these application programs. The application programs or a selected part of these application programs constitute a computer software product providing a transmission quality evaluation service as described above, when executed on the system platform. Further, such computer software product is constituted by a storage medium storing these application programs or said selected part of application programs. Further, the monitoring nodes 2 and 6, and the source node 1, can be implemented as pure hardware solutions.

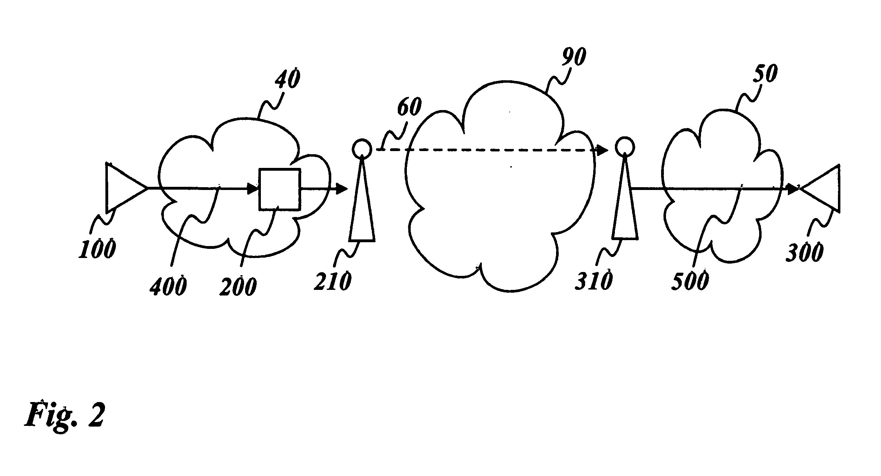

Fig. 2 shows a source node 100, a destination node 300, a first wireless transmitter station 210, a second wireless transmitter station 310, and a monitoring node 200. An IPTV data packet stream together with associated meta-information is injected by the source node on a first transmission path 400 through a first wire-lined transport network 40. To reach the destination node 300, the IPTV data packet stream has to pass a wireless link 60 wherein the first wireless transmitter station 210 sends the IPTV data packets via a wireless network 90 (e.g., a WLAN, UMTS-HSDPA) to the second wireless transmitter station 310 (WLAN = Wireless Local Area Network; UMTS = Universal Mobile Telecommunications Service; HSDPA = High Speed Downlink Packet Access). From the second wireless transmitter station 310, the IPTV data packets are transmitted on a second transmission path 500 through a second wire-lined transport network 50 to the destination node 300.

To save valuable bandwidth on the wireless link 60, the monitoring node 200 detects the data packets that are to be sent via the wireless link 60, accesses these data packets, strips off the meta-information from the IPTV data packets, and forwards the IPTV data packets without the meta-information to the first wireless transmitter station 210. Therefore, the evaluation of the transmission quality according to the present invention can only be conducted on the first transmission path 400 between the source node 100 and the monitoring node 200, through the first wire-lined transport network 40.

## Claims

1. A method of evaluating a transmission quality of an audio and/or video data stream transmitted as a data packet stream via a transmission :
path (12a, 12b) from a source node (1) through a packet-based network (20) to a destination node (3),
the method comprising the steps of:
assigning, by the source node (1), meta-information related to the data packets to the data packets and injecting, by the source node (1), the data packets together with said assigned meta-information as the data packet stream into the transmission path (12a, 12b) whereby the meta-information is conveyed in a header of the data packets; and
monitoring, at a monitoring node (2, 6) located at the transmission path (12a, 12b), the meta-information of data packets passing the monitoring node (2, 6) on said transmission path (12a, 12b);
**characterised in**
**that** the method further comprises the steps of:
inserting, by the source node (1), statistical reference information associated with the transmitted data packets into the data packet stream at specific time-steps whereby specific packets carry the statistical reference information;
receiving, at said monitoring node (2, 6), the statistical reference information associated with the transmitted data packets; and
providing, based on the monitored meta-information and the received statistical reference information, a measure of the transmission quality.

2. The method of claim 1,
**characterised in**
**that** the method comprises the further steps of:
calculating, at the monitoring node (2, 6), local statistics about the passed data packets based on the monitored meta-information of the passed data packets; and
comparing, by the monitoring node (2, 6), the local statistics with the received statistical reference information.

3. The method of claim 1,
**characterised in**
**that** the method comprises the further steps of:
assigning as said meta-information a significance class to each data, packet transmitted in the data packet stream, the significance class indicating a significance of a data packet with regard to an experienced quality of the audio and/or video data stream;
providing, by the source node (1), the number of data packets transmitted per significance class as statistical reference information to the monitoring node (2, 6);
counting, by the monitoring node (2, 6), the number of data packets passing the monitoring node (2, 6) per significance class;
determining a number of lost data packets per significance class as a difference between the number of data packets provided as statistical reference information and the number of counted data packets per significance class; and
evaluating, based on the determined number of lost data packets per significance class, a transmission quality of the audio and/or video data stream.

4. The method of claim 3,
**characterised in**
**that** the method comprises the further steps of:
using packet counters to indicate the number of data packets transmitted during a predefined time segment as statistical reference information;
placing, by the source node (1), said statistical reference information at the end of the predefined time segment into the data packet stream; counting, by the monitoring node (2, 6), the number of data packets passing the monitoring node during the predefined time segment; extracting, by the monitoring node (2, 6), the statistical reference information from the data packet stream and comparing the received number of data packets transmitted during the predefined time segment with the number of data packets counted during the predefined time segment;
providing, based on the comparison result, a transmission quality of the audio and/or video data stream characteristic for the predefined time segment.

5. The method of claim 1,
**characterised in**
**that** the method comprises the further step of:
conveying the meta-information in an unencrypted signalling field of the data packets.

6. The method of claim 1,
**characterised in**
**that** the method comprises the further step of:
removing, by the monitoring node (2, 6), the meta-information from the data packet stream.

7. A source node (1) for evaluating a transmission quality of an audio and/or video data stream transmitted as a data packet stream via a transmission path (12a, 12b) from the source node (1) through a packet-based network (20) to a destination node (3),
the source node (1) comprising a control unit adapted to assign meta-information related to the data packets to the data packets and inject the data packets together with said assigned meta-information as the data packet stream into the transmission path (12a, 12b) whereby the meta-information is conveyed in a header of the data packets,
**characterised in**
**that** the control unit is further adapted to insert statistical reference information associated with the transmitted data packets into the data packet stream at specific time-steps whereby specific packets carry the statistical reference information.

8. A monitoring node (2, 6) for evaluating a transmission quality of an audio and/or video data stream, whereby the monitoring node (2, 6) is located at a transmission path (12a, 12b) of the audio and/or video data stream transmitted as a data packet stream from a source node (1) through a packet-based network (20) to a destination node (3),
the monitoring node (2, 6) comprising a control unit adapted to monitor meta-information related to data packets passing the monitoring node (2, 6) on said transmission path (12a, 12b), the meta-information assigned to the data packets by the source node (1) and injected together with the data packets as the data packet stream into the transmission path (12a, 12b), and the meta-information conveyed in a header of the data packets,
**characterised in**
**that** the control unit is further adapted to receive statistical reference information associated with the transmitted data packets and inserted by the source node (1) into the data packet stream at specific time-steps, said statistical reference information being carried by specific packets, and provide, based on the monitored meta-information and the received statistical reference information, a measure of the transmission quality.

9. The monitoring node (2, 6) of claim 8,
**characterised in**
**that** the control unit is further adapted to report the measure of the transmission quality to the source node (1) and/or to the destination node (3) and/or to an operator of the network (20).

## Patentansprüche

1. Ein Verfahren zur Bewertung einer Übertragungsqualität eines über einen Übertragungspfad (12a, 12b) als Datenpaketstrom von einem Quellknoten (1) über ein paketbasiertes Netzwerk (20) an einen Zielknoten (3) übertragenen Audio- und/oder Video-Datenstroms,
wobei das Verfahren die folgenden Schritte umfasst:
Zuweisen, durch den Quellknoten (1), von Meta-Informationen, welche die Datenpakete betreffen, an die Datenpakete, und Einspeisen, durch den Quellknoten (1), der Datenpakete zusammen mit den besagten zugewiesenen Meta-Informationen als Datenpaketstrom in den Übertragungspfad (12a, 12b), wobei die Meta-Informationen in einem Kopfteil des Datenpakets transportiert werden: und
Überwachen, an einem auf dem Übertragungspfad angeordneten Überwachungsknoten (2, 6), der Meta-Informationen der Datenpakete, welche den Überwachungsknoten (2, 6) auf dem besagten Übertragungspfad (12a, 12b) durchlaufen:
**dadurch gekennzeichnet, dass**
das Verfahren weiterhin die folgenden Schritte umfasst:
Einzügen, durch den Quellknoten (1), von statistischen Referenzinformationen, welche mit den übertragenen Datenpakete assoziiert sind, in den Datenpaketstrom in spezifischen Zeitschritten, wobei spezifische Pakete die statistische Referenzinformationen befördern:
Empfangen, an dem besagten Überwachungsknoten (2, 6), der statistischen Referenzinformationen, welche mit den übertragenen Datenpaketen assoziiert sind; und
Bereitstellen, auf der Basis der überwachten Meta-Informationen und der empfangenen statistischen Referenzinformationen, eines Maßes für die Übertragungsqualität.

2. Das Verfahren nach Anspruch 1,
**dadurch gekennzeichnet, dass**
das Verfahren weiterhin die folgenden Schritte umfasst:
Berechnen, an dem Überwachungsknoten (2, 6), von lokalen Statistiken über die durchgelaufenen Datenpakete auf der Basis der überwachten Meta-Informationen der durchgelaufenen Datenpakete; und
Vergleichen, durch den Übervvachungsknoten (2, 6), der lokalen Statistiken mit den empfangenen statistischen Referenzinformationen.

3. Das Verfahren nach Anspruch 1,
**dadurch gekennzeichnet, dass**
das Verfahren weiterhin die folgenden Schritte umfasst:
Zuweisen einer Signifikanzklasse als besagte Meta-Information an jedes in dem Datenpaketstrom übertragene Datenpaket, wobei die Signifikanzklasse eine Signifikanz eines Datenpakets in Bezug auf eine festgestellte Qualität des Audio- und/oder Video-Datenstroms angibt;
Bereitstellen, durch den Quellknoten (1), der Anzahl von übertragenen Datenpaketen je Signifikanzklasse als statistische Referenzinformationen an den Überwachungsknoten (2, 6);
Zählen, durch den Überwachungsknoten (2, 6), der Anzahl von Datenpaketen, welche den Übervvachungsknoten (2, 6) durchlaufen, je Signifikanzklasse;
Ermitteln einer Anzahl von verlorenen Datenpaketen je Signifikanzklasse als eine Differenz zwischen der Anzahl von als statistische Referenzinformationen bereitgestellten Datenpaketen und der Anzahl von gezählten Datenpaketen je Signifikanzklasse; und
Bewerten, auf der Basis der ermittelten Anzahl von verlorenen Datenpaketen je Signifikanzklasse, einer Übertragungsqualität des Audio- und/oder Video-Datenstroms.

4. Das Verfahren nach Anspruch 3,
**dadurch gekennzeichnet, dass**
das Verfahren weiterhin die folgenden Schritte umfasst:
Verwenden von Paketzählern, um die Anzahl von Datenpaketen, welche während eines vorgegebenen Zeitsegments als statistische Referenzinformationen übertragen werden, anzuzeigen;
Einfügen, durch den Quellknoten (1), der besagten statistischen Referenzinformationen am Ende des vorgegebenen Zeitsegments in den Datenpaketstrom;
Zählen, durch den Überwachungsknoten (2, 6), der Anzahl von Datenpaketen, welche den Übervvachungsknoten während des vorgegebenen Zeitsegments durchlaufen;
Extrahieren, durch den Überwachungsknoten (2, 6), der statistischen Referenzinformationen aus dem Datenpaketstrom, und Vergleichen der empfangenen Anzahl der während des vorgegebenen Zeitsegments übertragenen Datenpakete mit der Anzahl der während des vorgegebenen Zeitsegments gezählten Datenpakete;
Bereitstellen, auf der Basis des Vergleichsergebnisses, einer Übertragungsqualität des Audio- und/oder Video-Datenstroms, welche für das vorgegebene Zeitsegment kennzeichnend Ist.

5. Das Verfahren nach Anspruch 1,
**dadurch gekennzeichnet, dass**
das Verfahren weiterhin den folgenden Schritt umfasst:
Befördern der Meta-Informationen in einem unverschlüsselten Signalisierungsfeld der Datenpakete.

6. Das Verfahren nach Anspruch 1,
**dadurch gekennzeichnet, dass**
das Verfahren weiterhin den folgenden Schritt umfasst:
Entfernen, durch den Überwachungsknoten (2, 6), der Meta-Informationen aus dem Datenpaketstrom.

7. Ein Quellknoten (1) zur Bewertung einer Übertragungsqualität eines Audio- und/oder Video-Datenstroms, welcher als Datenpaketstrom über einen Übertragungspfad (12a, 12b) vom Quellknoten (1) durch ein paketbasiertes Netzwerk (20) an einen Zielknoten (3) übertragen wird,
wobei der Quellknoten (1) eine Steuereinheit umfasst, welche fähig ist, den Datenpaketen die Datenpakete betreffende Meta-Informationen zuzuweisen und die Datenpakete zusammen mit den besagten zugewiesenen Meta-Informationen als Datenpaketstrom in den Übertragungspfad (12a, 12b) einzuspeisen, wobei die Meta-Informationen in einem Kopfteil der Datenpakete befördert werden,
**dadurch gekennzeichnet, dass**
die Steuereinheit weiterhin fähig ist, mit den übertragenen Datenpaketen assoziierte statistische Referenzinformationen in spezifischen Zeitschritten in den Datenpaketstrom einzufügen, wobei spezifische Pakete die statistischen Referenzinformationen transportieren.

8. Ein Überwachungsknoten (2, 6) zur Bewertung einer Übertragungsqualität eines Audio- und/oder Video-Datenstroms, wobei der Überwachungsknoten (2, 6) auf einem Übertragungspfad (12a, 12b) des Audio- und/oder Video-Datenstroms, welcher als ein Datenpaketstrom Ober ein paketbasiertes Netzwerk (20) vom Quellknoten (1) an einen Zielknoten (3) übertragen wird, angeordnet ist, wobei der Überwachungsknoten (2, 6) eine Steuereinheit umfasst, die fähig ist, Meta-Informationen, welche die den Überwachungsknoten (2, 6) auf dem besagten Übertragungspfad (12a, 12b) durchlaufenden Datenpakete betreffen, die den Datenpaketen vom Quellknoten (1) zugewiesenen und zusammen mit den Datenpaketen als Datenpaketstrom in den Übertragungspfad (12a, 12b) eingespeisten Meta-Informationen und die in einem Kopfteil der Datenpakete beförderten Meta-Informationen zu überwachen,
**dadurch gekennzeichnet, dass**
die Steuereinheit weiterhin fähig ist, mit den übertragenen Datenpaketen assoziierte und vom Quellknoten (1) in spezifischen Zeitschritten in den Datenpaketstrom eingespeiste statistische Referenzinformationen zu empfangen, wobei die besagten statistischen Referenzinformationen von spezifischen Paketen transportiert werden, und auf der Basis der überwachten Meta-Informationen und der empfangenen statistischen Referenzinformationen ein Maß für die Übertragungsqualität bereitzustellen.

9. Der Übertragungsknoten (2, 6) nach Anspruch 8,
**dadurch gekennzeichnet, dass**
die Steuereinheit weiterhin fähig ist, das Maß für die Übertragungsqualität an den Quellknoten (1) und/oder an den Zielknoten (3) und/oder an einen Betreiber des Netzwerks (20) zu melden.

## Revendications

1. Procédé d'évaluation d'une qualité de transmission d'un flux de données audio et/ou vidéo transmis sous forme d'un flux de paquets de données par l'intermédiaire d'un chemin de transmission (12a, 12b) depuis un noeud source (1) à travers un réseau en paquets (20) vers un noeud de destination (3),
le procédé comprenant les étapes suivantes :
attribuer aux paquets de données, grâce au noeud source (1), des informations méta liées aux paquets de données et injecter, grâce au noeud source (1), les paquets de données avec lesdites informations méta attribuées en tant que flux de paquets de données dans le chemin de transmission (12a, 12b) au moyen duquel les informations méta sont acheminées dans un en-tête des paquets de données ; et
surveiller, au niveau d'un noeud de surveillance (2, 6) situé dans le chemin de transmission (12a, 12b), les informations méta des paquets de données passant par le noeud de surveillance (2. 6) dans ledit chemin de transmission (12a, 12b) ;
**caractérisé en ce que**
le procédé comprend en outre les étapes suivantes :
insérer, grâce au noeud source (1), des informations statistiques de référence associées aux paquets de données transmis dans le flux de paquets de données à des pas de temps spécifiques, des paquets spécifiques transportant ainsi les informations statistiques de référence ;
recevoir, au niveau dudit noeud de surveillance (2, 6), les informations statistiques de référence associées aux paquets de données transmis ; et
fournir, en se basant sur les informations méta surveillées et les informations statistiques de référence reçues, une mesure de la qualité de transmission.

2. Procédé selon la revendication 1,
**caractérisé en ce que**
le procédé comprend les étapes supplémentaires suivantes :
calculer, au niveau du noeud de surveillance (2, 6), des statistiques locales concernant les paquets de données passés en se basant sur les informations méta surveillées des paquets de données passés ; et
comparer, grâce au noeud de surveillance (2, 6), les statistiques locales aux informations statistiques de référence reçues.

3. Procédé selon la revendication 1,
**caractérisé en ce que**
le procédé comprend les étapes supplémentaires suivantes :
attribuer en tant que lesdites informations méta une classe de signification à chaque paquet de données transmis dans le flux de paquets de données, la classe de signification indiquant une signification d'un paquet de données en fonction d'une qualité perçue du flux de données audio et/ou vidéo ;
fournir, grâce au noeud source (1), le nombre de paquets de données transmis par classe de signification en tant qu'informations statistiques de référence au noeud de surveillance (2, 6) ;
compter, grâce au noeud de surveillance (2. 6), le nombre de paquets de données passant par le noeud de surveillance (2, 6) par classe de signification ;
déterminer un nombre de paquets de données perdus par classe de signification comme une différence entre le nombre de paquets de données fournis en tant qu'informations statistiques de référence et le nombre de paquets de données comptés par classe de signification ; et
évaluer, en se basant sur le nombre déterminé de paquets de données perdus par classe de signification, une qualité de transmission du flux de données audio et/ou vidéo.

4. Procédé selon la revendication 3,
**caractérisé en ce que**
le procédé comprend les étapes supplémentaires suivantes :
utiliser des compteurs de paquets pour indiquer le nombre de paquets de données transmis durant un segment temporel prédéfini en tant qu'informations statistiques de référence ;
placer, grâce au noeud source (1), lesdites informations statistiques de référence à la fin du segment temporel prédéfini dans le flux de paquets de données ;
compter, grâce au noeud de surveillance (2, 6), le nombre de paquets de données passant par le noeud de surveillance durant le segment temporel prédéfini ;
extraire, grâce au noeud de surveillance (2, 6), les informations statistiques de référence du flux de paquets de données et comparer le nombre reçu de paquets de données transmis durant le segment temporel prédéfini au nombre de paquets de données compté durant le segment temporel prédéfini ;
fournir, en se basant sur le résultat de comparaison, une qualité de transmission du flux de données audio et/ou vidéo caractéristique pour le segment temporel prédéfini.

5. Procédé selon la revendication 1,
**caractérisé en ce que**
le procédé comprend l'étape supplémentaire suivante :
acheminer les informations méta dans un champ de signalisation non crypté des paquets de données.

6. Procédé selon la revendication 1,
**caractérisé en ce que**
le procédé comprend l'étape supplémentaire suivante :
retirer, grâce au noeud de surveillance (2, 6), les informations méta du flux de paquets de données.

7. Noeud source (1) destiné à évaluer une qualité de transmission d'un flux de données audio et/ou vidéo transmis sous la forme d'un flux de paquets de données par l'intermédiaire d'un chemin de transmission (12a, 12b) depuis le noeud source (1) à travers un réseau en paquets (20) vers un noeud de destination (3),
le noeud source (1), comprenant un module de commande conçu pour attribuer aux paquets de données des informations méta liées aux paquets de données et pour injecter les paquets de données avec lesdites informations méta attribuées en tant que flux de paquets de données dans le chemin de transmission (12a, 12b) au moyen duquel les informations méta sont acheminées dans un en-tête des paquets de données,
**caractérisé en ce que**
le module de commande est en outre conçu pour insérer des informations statistiques de référence associées aux paquets de données transmis dans le flux de paquets de données à des pas de temps spécifiques, des paquets spécifiques transportant ainsi les informations statistiques de référence.

8. Noeud de surveillance (2, 6) destiné à évaluer une qualité de transmission d'un flux de données audio et/ou vidéo, le noeud de surveillance (2, 6) étant situé au niveau d'un chemin de transmission (12a, 12b) du flux de données audio et/ou vidéo transmis sous la forme d'un flux de paquets de données depuis un noeud source (1) à travers un réseau en paquets (20) vers un noeud de destination (3), le noeud de surveillance (2, 6) comprenant un module de commande conçu pour surveiller des informations méta liées aux paquets de données passant par le noeud de surveillance (2, 6) dans ledit chemin de transmission (12a, 12b), les informations méta attribuées aux paquets de données par le noeud source (1) et injectées avec les paquets de données en tant que flux de paquets de données dans le chemin de transmission (12a, 12b), et les informations méta acheminées dans un en-tête des paquets de données,
**caractérisé en ce que**
le module de commande est en outre conçu pour recevoir des informations statistiques de référence associées aux paquets de données transmis et insérées par le noeud source (1) dans le flux de paquets de données à des pas de temps spécifiques, lesdites informations de référence statistique étant transportées par des paquets spécifiques, et pour fournir, en se basant sur les informations méta surveillées et les informations de référence statistique reçues, une mesure de la qualité de transmission.

9. Noeud de surveillance (2, 6) selon la revendication 8,
**caractérisé en ce que**
le module de commande est en outre conçu pour signaler la mesure de la qualité de transmission au noeud source (1) et/ou au noeud de destination (3) et/ou à un opérateur du réseau (20).
